# EUROPEAN PATENT APPLICATION

(11) **EP 0 973 078 A1**
(43) Date of publication of application: **19.01.2000**
(21) Application number: 99112954.5
(22) Date of filing: 05.07.1999
(51) Int. Cl.: G05B 15/02, G05B 11/42, G05B 19/418

(54) **Process control system**

(30) Priority: 13.07.1998 JP 19703398; 05.04.1999 JP 9753999
(71) Applicant: Yokogawa Electric Corporation, Tokyo 180-8750 (JP)
(72) Inventor: Shirai, Toshiaki, Musashino-shi, Toyko 180-8750 (JP); Ura, Naoki, Musashino-shi, Toyko 180-8750 (JP); Kumagai, Hiroshi, Musashino-shi, Toyko 180-8750 (JP); Hoshino, Umihiko, Musashino-shi, Toyko 180-8750 (JP); Inoue, Takeshi, Musashino-shi, Toyko 180-8750 (JP); Yamamoto, Shuji, Musashino-shi, Toyko 180-8750 (JP)
(74) Representative: Henkel, Feiler, Hänzel

(57) **Abstract**

The present invention is characterized by the following four points:
(1) Objects having the functions for configuring a process control system are distributed and arranged in a plurality of computers connected to a network and each distributed and arranged object shares the functions that the process control system has.
(2) Information component cassettes having individual information related to monitoring and operation and methods to display the information in an optimum display form are created and these cassettes are provided according to the types of information.
(3) An information component deck, which arranges the information component cassettes and offers a unified interface for accessing the information component cassettes, is provided.
(4) Control objects for controlling a plant and display objects for monitoring and operation of the plant are provided. These control objects and display objects that are related to each other are operated in association with each other.

## Description

### BACKGROUND OF THE INVENTION

### 1. FIELD OF THE INVENTION

This invention relates to a process control system that performs control and operation of plants by controlling process variables, such as temperatures, pressures, etc. existing in plants.

### 2. DESCRIPTION OF THE PRIOR ART

The process control system has a configuration in which an information command station and control stations are connected to a communication bus, and the control stations handles plant control and the information command station handles plant monitoring and operation. According to the scale of a plant that is the target of control, a plurality of control stations is distributed and arranged over the plant.

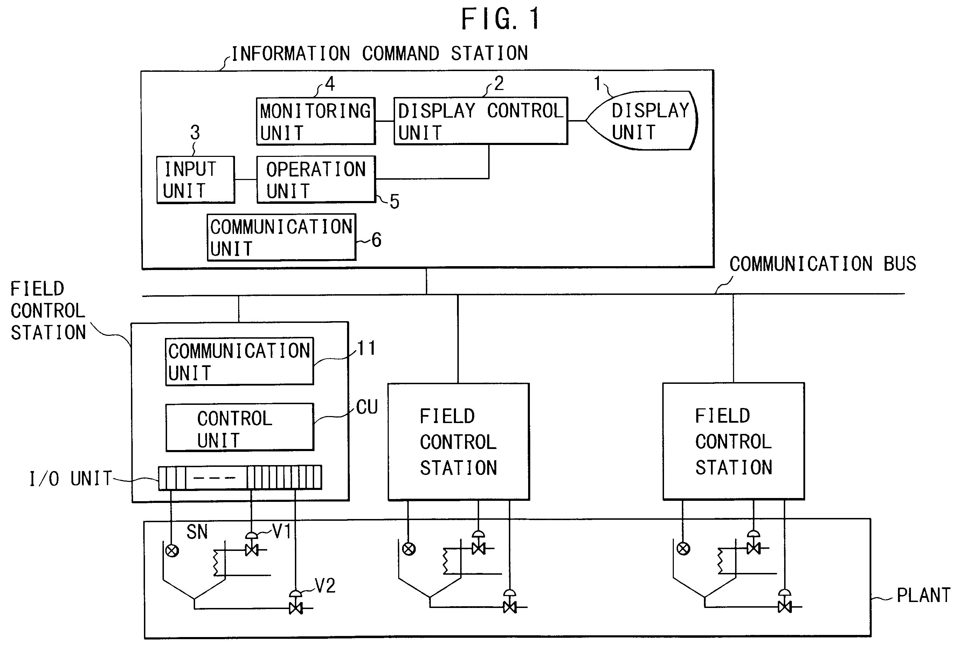

Figure 1 is a drawing indicating an example of a configuration of conventional process control systems.

In Figure 1, Information Command Station ICS and Field Control Stations FCS are connected to Communication Bus BS. The field control stations FCS control plant PLT. According to the scale of the plant, a plurality of control stations is distributed and arranged over the plant.

In the information command station ICS, display unit 1 is configured with a CRT, which has a man-machine interface function, and others. Display control unit 2 controls the display unit 1 and makes the display unit 1 show various screens or windows required for plant control and monitoring.

Input unit 3 is configured with a keyboard, mouse, and others and handles data input for plant operation and control, and others.

Monitoring unit 4 monitors the plant. Operation unit 5 carries out operations for plant control. The results of monitoring and operation of the plant are displayed on the display unit 1.

Communication unit 6 exchanges data with each control station via Communication Bus BS according to a specified communication protocol.

In a field control station FCS, Control Unit CU handles control of a plant PLT. Input-output unit (I/O unit) 10 receives various types of signal as inputs from or transmits signals as outputs to the plant PLT. For example, an I/O unit inputs and/or outputs analog signals of 4 to 20 mA or 1 to 5 V, thermocouple signals, contact signals, etc.

Communication unit 11 exchanges data with information command station or with each control station via the communication bus BS according to a specified communication protocol.

In the plant PLT, sensor SN detects a process value, such as temperature and pressure. Opening of valves V1 and V2 is controlled by the manipulated signal given by the field control station FCS.

For example, an analog signal of 4 to 20 mA or 1 to 5 V output by sensor SN is input to I/O unit 10. Based on this input, control unit CU carries out control calculations and determines a manipulated variable. This manipulated variable is output from I/O unit 10 as an analog signal of 4 to 20 mA or 1 to 5 V, and this output controls the opening of valves V1 and V2.

In the system shown in Figure 1, a plant control is executed by controlling process variables, such as temperatures and pressures, existing in the plant.

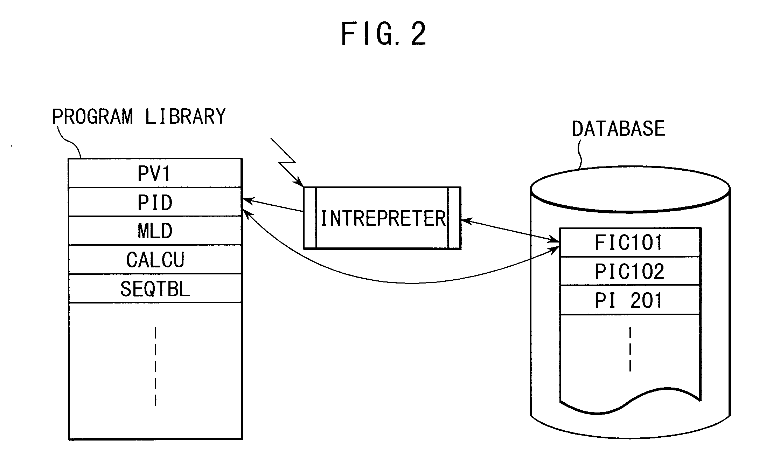

Figure 2 illustrates the status of storing data and programs of a function block process in the control units of the system. Function blocks are the elements of a control system and, for example, include PID computation block (PID), indication block (PVI) and others. Various control systems are constructed by combining these function blocks.

As shown in Figure 2, data and programs are stored in database DB and program library PL, respectively.

Data blocks to which tag names are attached are stored in database DB. Examples of these tag names are: FIC101, PIC102 and PI201.

Programs used for processing the data of function blocks corresponding to each data block are prepared in program library PL. More than one program is prepared because there are two or more algorithms for processing function blocks.

Interpreter INT reads the data blocks in turn, selects and calls up a processing program specified in a read data block from program library PL. The called-up processing program executes calculation process using the data in the corresponding data block.

For example, interpreter INT reads data block FIC101, selects and calls up a processing program PID specified in the data block from program library PL. The processing program PID executes calculation process using the data in the data block FIC101.

However, the following problems are found in the example of a conventional system as shown in Figure 1:

### (Problem 1)

Since each function such as monitoring and control are designed to have its optimum function, it is necessary to have individual dedicated hardware and software board (OS).

For example, the control function mounted in control unit CU is designed on the premise of a dedicated interface for I/O unit 10. Accordingly, physical restrictions are imposed on the control function so that the control function and I/O unit 10 must be mounted on the same hardware (field control station FCS).

In addition, if a function is to be mounted on a separate device, re-configuration of the function is required, such as program modification or re-compiling.

### (Problem 2)

As shown in Figure 2, programs and data are maintained separately. For the programs, algorithms of processing all types of function block in the system are integrated into a library. Thus, when changing an algorithm for function blocks, the entire program library must be updated even if only one algorithm for one type of function block is changed.

For changing or adding a function, it is necessary to re-compile and re-load the entire program library, which requires temporary shutdown of the system being operated.

### (Problem 3)

As shown in the example of a program library in Figure 2, the functions not being used are mounted and integrated together with the functions actually used as one. For this reason, the required range of shared parts increases regardless of whether the system scale is large or small. This results in an increased system cost even when constructing a small-scale system. In other words, it is not possible to group functions according to the user's needs.

### SUMMARY OF THE INVENTION

This invention is intended to solve the problems described above. The purpose of this invention is to materialize a process control system that is more cost effective and offers better scalability (expandability) of system scale.

### BRIEF DESCRIPTION OF DRAWINGS

Figure 1 shows an example of a configuration of a conventional process control system.
Figure 2 illustrates the status of storing data and programs of a function block process in the control units of the system in Figure 1.
Figure 3 shows the configuration of a first embodiment of this invention.
Figure 4 illustrates an example in which a function block is treated as an object.
Figure 5 shows an example of configuring an object having control functions.
Figure 6 shows a first example of the configuration of a process control system according to this invention.
Figure 7 shows a second example of the configuration of a process control system according to this invention.
Figure 8 shows a third example of the configuration of a process control system according to this invention.
Figure 9 shows a fourth example of the configuration of a process control system according to this invention.
Figure 10 shows a fifth example of the configuration of a process control system according to this invention.
Figure 11 shows a sixth example of the configuration of a process control system according to this invention.
Figure 12 illustrates the configuration of a second embodiment of this invention.
Figure 13 shows an example of materializing an information component deck and an information component cassette.
Figure 14 shows how an information component deck is viewed from the outside.
Figure 15 illustrates the configuration of a third embodiment of the present invention.
Figure 16 shows an example of an instrument faceplate.
Figure 17 shows an example of a meter faceplate.
Figure 18 shows an example of a trend graph.
Figure 19 is a flow chart illustrating the operation of the third embodiment of this invention.
Figure 20 is a flow chart illustrating the operation of the third embodiment of this invention.

### DESCRIPTION OF THE PREFERRED EMBODIMENTS

This invention will be described below using the drawings and dividing the description according to each embodiment.

### (1) First Embodiment

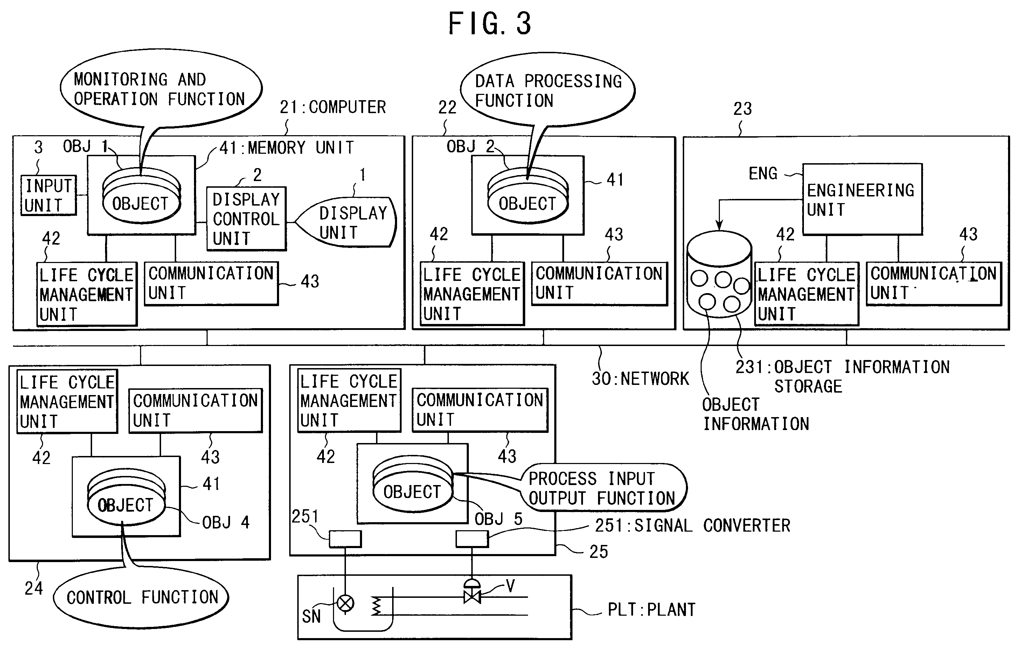

Figure 3 illustrates the configuration of a first embodiment of this invention.

In Figure 3, the computers 21 to 25 are connected to network 30.

Each of these computers is provided with memory unit 41, life cycle management unit 42 and communication unit 43.

In the memory unit 41, objects having functions for configuring process control systems reside. The objects residing in the memory unit 41 vary depending on the computer. Memory unit 41 is, for example, the main memory of a computer.

Life cycle management unit 42 manages creation, deletion, copying, movement, etc. of objects. Life cycle management unit 42 is actualized, for example, by a life cycle manager, name server, download server, etc. The life cycle manager creates an object when necessary and deletes it when it is no longer necessary. The name server manages the name of a created object. The download server downloads an object to a computer in response to a request.

Communication unit 43 implements communications between objects via network 30. The Function as a process control system is performed by exchanging data between functions through the communication between objects.

The memory unit 41 of the computer 21 stores the object OBJ1, which has the monitoring and operation function. The monitoring and operation function is in charge of displaying information required for process control as well as running operation of process control. The monitoring and operation function is provided in the information command station ICS in the example of conventional systems.

The object OBJ1 is started taking the input from input unit 3 as a message and operates the plant PLT via objects with the control function and objects with the process I/O function, as well as makes display control unit 2 act to display the result of operation on display unit 1.

The memory unit 41 of the computer 22 stores object OBJ2 having the data processing function. The data processing function provides sophisticated control and operation support by subjecting the data handled in process control to secondary processing. The data processing function is provided in the information command station ICS and/or field control station FCS in the example of a conventional control system shown in Figure 1. The object OBJ2 carries out the process utilizing the data in objects having the control function and objects having the process input-output function.

The computer 23 includes engineering unit ENG. The engineering unit ENG defines and creates objects and constructs a system combining these objects. The engineering unit ENG may be configured with the objects. Object information storage 231 stores object information OD.

The information of objects defined and created by the engineering unit ENG is stored in the object information storage 231.

The memory unit 41 of computer 24 stores object OBJ4, which has the control function. The control function is in charge of process control. The control function is provided in the field control station FCS in the example of a conventional system shown in Figure 1.

The object OBJ4, for example, performs control calculation based on the process inputs sent from sensor SN in the plant PLT to determine a manipulated variable. This manipulated variable is given to valve V in the plant PLT.

The memory unit 41 of computer 25 stores object OBJ5, which has the process input-output function. The process input-output function inputs or outputs plant signals handled in the process control system. The process input-output function is provided in I/O unit 10 in the example of a conventional system shown in Figure 1.

The object OBJ5 works on signal converter 251 and exchanges signals with the plant PLT. For example, the object OBJ5 receives an analog signal of 4 to 20 mA or 1 to 5 V from the sensor SN via signal converter 251 as an input and gives a manipulated variable signal of 4 to 20 mA or 1 to 5 V to the valve V via the signal converter 251.

In this case, the object may be configured either with an object or with a combination of several objects.

Furthermore, one function may be materialized with a plurality of objects.

In addition, an object having the display function to display only the information required for process control may be provided in place of an object having the monitoring and operation function.

Also, a configuration in which each object is individually independent and self-sustaining may be used. That is, each object is created not as a mere object but as a component object. The following configuration is adopted to make objects component in character:
(1) Life cycle management unit 42 is provided to manage the creation, deletion, copying and movement of objects, and
(2) An explicitly defined interface unit is provided to separate the definition of the interface unit and mounting of objects.

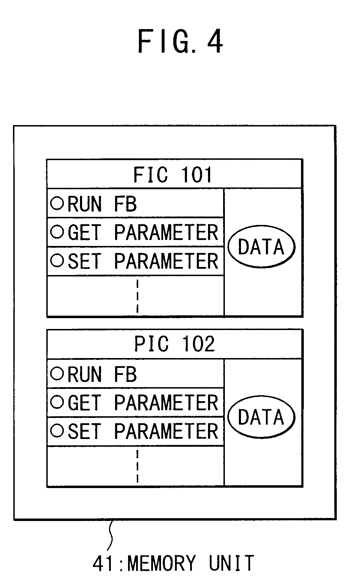

Figure 4 is a drawing illustrating an example in which a function block is treated as an object.

As shown in Figure 4, a procedure (method) and data are integrated in each of object, which is then stored in the memory unit 41 with a tag name. The method is equivalent to the program. FIC101 and PIC102 are tag names.

Each object is provided with an execution processing method RunFB, a reading processing method GetParameter and a writing method SetParameter.

An object, whose execution processing method RunFB is started up by a message or the like generated by a client computer, performs a calculation process on its data using the program stored inside the object.

As shown in Figure 4, a procedure (method) and data are encapsulated and handled in an integrated manner. Since a "tag" that is a unit identified as a function by the user is defined as an independent object, new functions can be added and existing functions can be changed or deleted for each tag. Furthermore, when addition, change or deletion is carried out, it does not affect objects other than the object whose functions are being added, changed, or deleted.

Not only the execution processing method but also all procedures related to the object are defined in each object as methods, therefore, each function can maintain its independence.

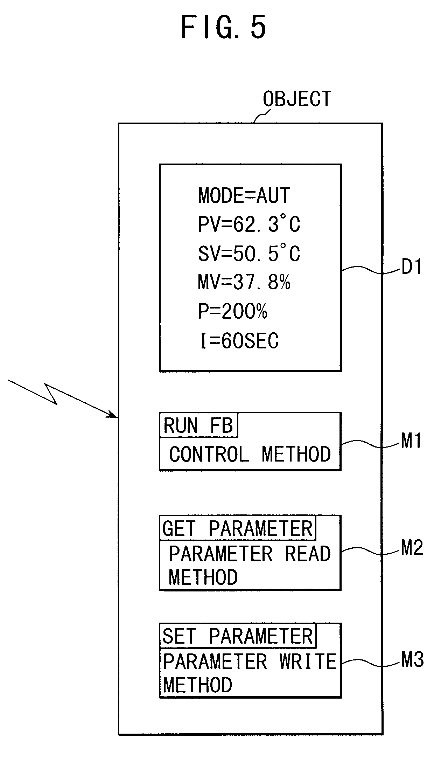

Figure 5 shows an example of configuring an object with control functions.

In Figure 5, the object OBJ with control functions is configured to integrate the data D1 and methods M1, M2 and M3.

The object OBJ is an object to carry out PID control. In the data D1, an operation mode (automatic operation mode AUT in Figure 5), process variable PV, setting value SV, and process output value MV are described. In method M1, execution-processing method RunFB and a control method for executing PID control are described. In method M2, reading-processing method GetParameter and a program to read parameters are described. In method M3, writing method SetParameter and a program to write parameters are described.

When execution-processing method RunFB is started up, PID control is executed by the control program using data D1.

When reading-processing method GetParameter is started up, specified parameters in data D1 are read.

When writing method SetParameter is started up, parameters specified in data D1 are written.

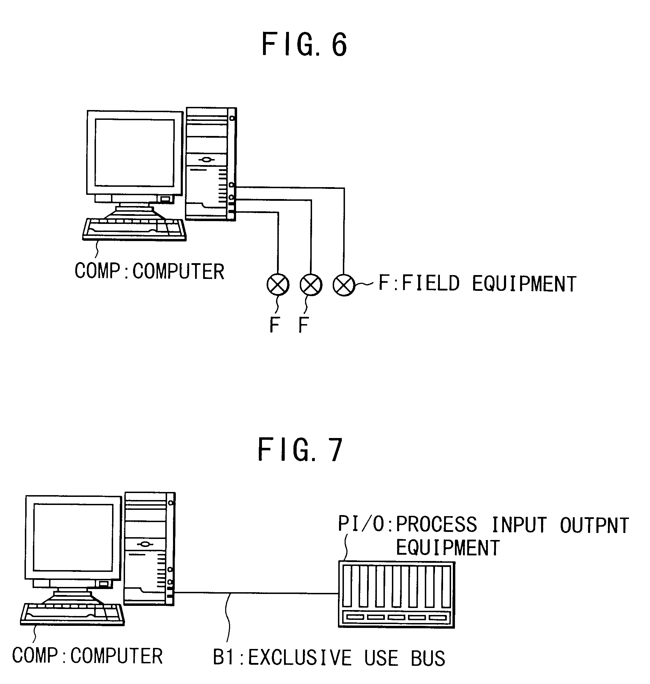

Figures 6 to 11 shows examples of a process control system configuration according to the present invention.

In the system shown in Figure 6, several of field equipment F are directly connected to computer COMP. All objects having functions to configure a process control system are mounted in computer COMP.

In the system shown in Figure 7, process input-output equipment PI/O is connected to computer COMP with process I/O exclusive-use bus B1. All objects having functions to configure a process control system are mounted in computer COMP.

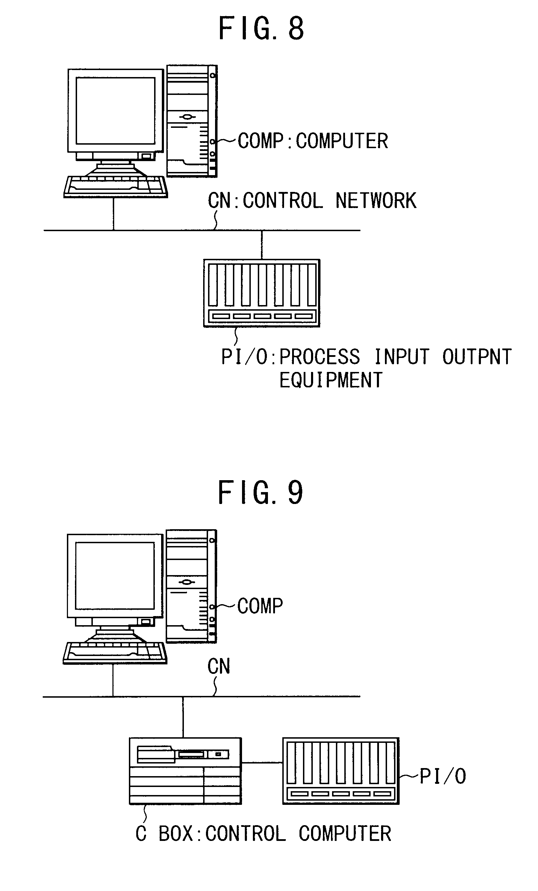

In the system shown in Figure 8, computer COMP and process input-output equipment PI/O are respectively connected to control network CN. All objects having functions to configure a process control system are mounted in computer COMP.

If process input-output equipment PI/O has intelligence, objects having process input-output functions may be mounted in process input-output equipment PI/O and other objects may be mounted in computer COMP.

In the system shown in Figure 9, computer COMP and control computer CBOX are connected to control network CN and process input-output equipment PI/O is directly connected to control computer CBOX. Objects with control functions are mounted in control computer CBOX and other objects are mounted in computer COMP.

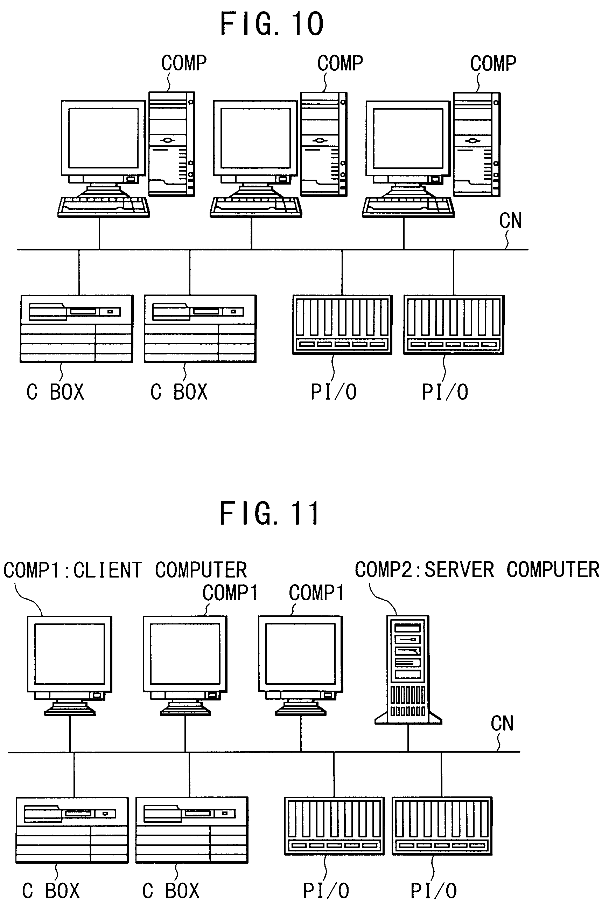

In the system shown in Figure 10, a plurality of computers COMP, a plurality of control computer CBOX, and a plurality of process input-output equipment PI/O are connected to control network CN. Individual functions are distributed and stored using the objects by mounting the objects with monitoring and operation functions to computers COMP, mounting the objects with control functions to control computer CBOX, and mounting the objects with process I/O functions to each of process input-output equipment PI/O.

In the system shown in Figure 11, client computers COMP1, server computer COMP2, control computers CBOX and each of process input-output equipment PI/O are connected to control network CN. The objects having human-machine interface functions, such as monitoring and operation functions and engineering operation functions, are not mounted in client computers COMP1 in the initial state but are loaded from server computer COMP2 to client computers COMP1 when they become necessary.

Objects with control functions are mounted in control computers CBOX and objects with process input-output functions are mounted in process input-output equipment PI/O.

According to the invention of the first embodiment, the following effects are obtained.
(1) Functions configuring a system become independent of the hardware and software board (OS). This frees the system from being subject to physical restrictions such as certain functions having to be mounted on the same hardware.
(2) Functions configuring a system are treated as objects, making the functions independent and self-sustaining. Therefore, addition, deletion or change of a certain function does not affect other functions. This makes the addition, deletion or change of functions possible while the system is being operated.
(3) Since the system configuration is based on software components, in which required function boards can be mounted as necessary, the system desired by the user can be constructed at a minimum cost without wasting any resources.

### (2) Second Embodiment

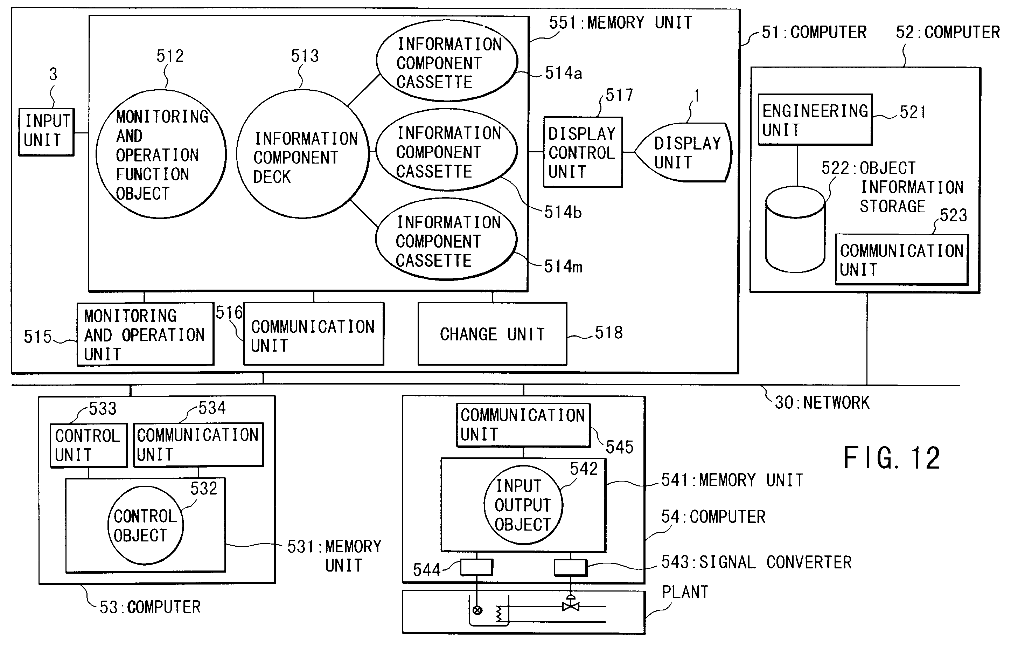

Figure 12 is a drawing indicating the configuration of a second embodiment of the present invention.

In Figure 12, computers 51 to 54 are connected to network 30. In these computers, objects each having a function to configure process control systems are arranged in a distributed manner, thus configuring a distributed object system.

In the computer 51, memory unit 511 supplies residing areas for monitoring and operation function object 512, information component deck 513 and information component cassettes 514a to 514n.

Monitoring and operation function object 512 carries out plant operation and monitoring and acts as function of information command station ICS in conventional systems.

Information component cassettes 514a to 514n are provided according to the types of information. Information component cassettes 514a to 514n are the objects having the information related to monitoring and operation of the plant, an access method for accessing this information, and a viewing method to display the information in the optimum form.

Information component deck 513 is the object that offers a unified interface for accessing information component cassettes 514a to 514n by arranging information component cassettes 514a to 514n.

Monitoring and operation unit 515 carries out monitoring and operation of the plant based on the autonomous operation of monitoring and operation function object 512.

Communication unit 516 implements communications between objects via network 30.

Display control unit 517 displays the information related to monitoring and operation of the plant based on the autonomous operation of information component cassettes 514a to 514n on the screen of display unit 1.

Alteration unit 518 dynamically adds or deletes the information component cassettes in the information component deck.

In the computer 53, memory unit 531 offers the residing area for control object 532. The control object 532 controls the plant. Control unit 533 controls the plant based on the autonomous operation of the control object 532. The control object 532 performs the function of field control station FCS in conventional systems.

Communication unit 534 implements communications between objects via network 30.

In the computer 54, memory unit 541 offers the residing area for input-output object 542. The input-output object 542 controls signal converters 543 and 544 to input or output signals between the plant PLT and the computer 54. The input-output object 542 performs the function of the I/O unit in conventional systems.

Communication unit 545 implements communications between objects via network 30.

In the computer 52, engineering unit 521 defines and creates objects. It also constructs a system by combining these objects. The engineering unit 521 stores the information on defined and created objects in object information storage 522.

Communication unit 523 implements communications between objects via the network 30.

Now, the information component cassettes and the information component deck characterizing this invention will be described below.

The information component cassettes are the objects containing the information related to targets of monitoring and operation in process control systems. An information component cassette has an access method for accessing its internal information and also has a viewing method for displaying the information in the optimum form if necessary.

Examples of the information component cassette are shown below.
(1) Tag process value and its viewing method
(2) Tag historical data and their viewing method
(3) Tag tuning data and their viewing method
(4) Manual data related to tag types (for example, measuring instrument of the tag type) and their viewing method
(5) Equipment management data and their viewing method

In addition, any of the data related to tags can be made to similar information components.

The tags mentioned here are identifiers attached to control blocks that become the configuration elements of a control system, measuring instruments that exist in a plant, and the like.

The information component deck is provided to summarize the information component cassettes. The information component deck is an object that offers a unified interface for arranging individual information component cassettes and accessing information component cassettes.

Now, the configuration of the information component deck and information component cassettes will be described.

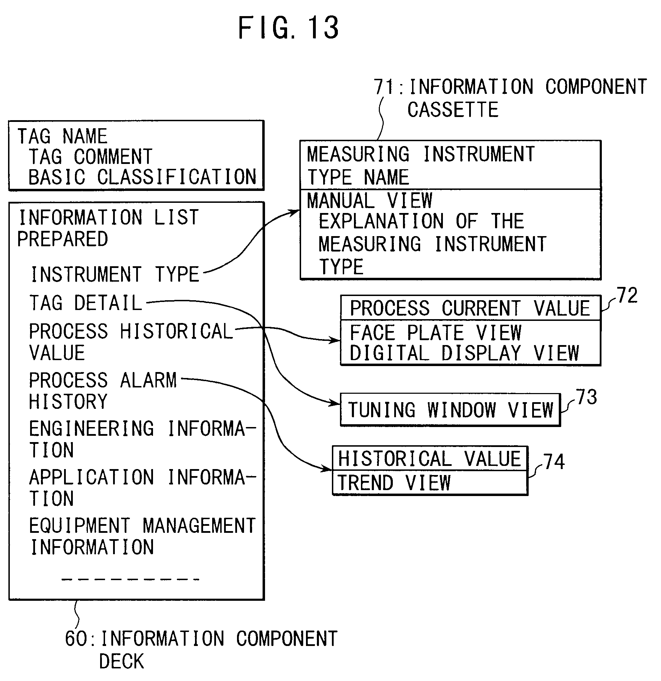

Figure 13 is a drawing indicating an example of realizing an information component deck and an information component cassette.

The information component deck is actualized in the following form:

An object (information component cassette), which uses a tag name as a key, is defined in the database. The form of database entity does not matter, but actualization of the object is facilitated by using an object database.

The database is divided into an "internal catalog part" and an "entity part." The "internal catalog part" is information component deck 60 and the "entity part" includes information component cassettes 71 to 74.

The information component deck 60 holds an "information list prepared." A tag name is given to information component deck 60. A tag comment and basic classification are attached to a tag name.

Examples of "information list prepared" are instrument type, tag detail, process current value, process historical value, process alarm history, engineering information, application information, equipment management information, etc.

For example, information component cassettes 71 to 74 ("entity part") relating to each item of the "information list prepared" of information component deck 60 are provided.

The information component cassette 71 holds the measuring instrument type name as data, and the manual view (explanation of the measuring instrument type) as the viewing method.

The information component cassette 72 holds the process current value as data, and the faceplate view and the digital display view as the viewing methods.

The information component cassette 73 holds the tuning window view as the viewing method.

The information component cassette 74 holds the historical value as data, and the trend view as the viewing method.

Although omitted in Figure 13, information component cassettes are also provided for other information list items similarly.

Information component cassettes hold the methods of accessing data and the data themselves if necessary.

An information component cassette further holds a standard viewing method. For example, an information component cassette holding the current process value holds the viewing method for the faceplate and the simple viewing method for digital values. For the purpose of only displaying the process current value on the screen, it is sufficient to call up these viewing methods. A viewing method has a link with the display component file for viewing and displays a display component in this file if necessary. Display control unit 517 holds the display component file.

Information in the "internal catalog part" can be added or deleted dynamically and the related information can be added progressively after constructing the system. This enables functions to be expanded flexibly in the future.

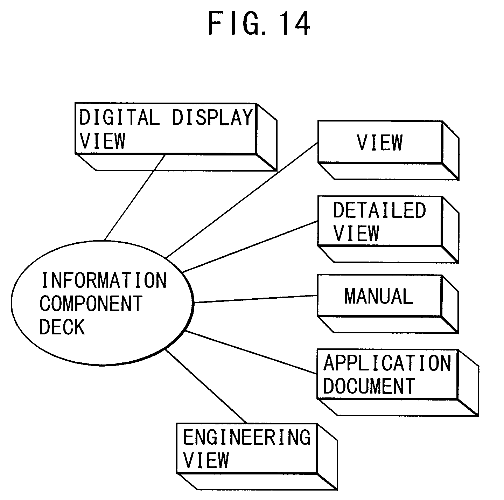

Figure 14 is a drawing indicating how an information component deck is viewed from the outside.

Figure 14 shows an example of the display on the screen of an information component deck.

In Figure 14, if "View" is clicked, an instrument faceplate will be displayed.

If "Detailed View" is clicked, a tuning window will be displayed.

If "Manual" is clicked, information for explaining classes of the object will be displayed.

If "Application Document" is clicked, information for explaining instance will be displayed.

If "Engineering View" is clicked, information related to the builder for constructing a system will be displayed.

To an information component deck as indicated in Figure 14, the operator can request the list of information component cassettes stored in the information component deck and can retrieve the required information or perform operations while displaying the information.

In the information component deck shown in Figure 13, the equipment management information is also made part of the information stored in the information component cassette. The equipment management information may actually be included in the external dedicated database. In this case, it is sufficient for the data access method to be defined as an interface to access that database.

The engineering function and the like for constructing a system may be handled by defining only a viewing method. Although all interfaces for the engineering function cannot actually be held as methods, an objective engineering window can be obtained by displaying a window for the engineering environment as a viewing method and passing the relevant tag name as a parameter.

In addition, the information component cassettes and the information component deck may reside in any computer, not restricted to the case in the embodiment.

The following effects are obtained according to the present invention of the second embodiment in addition to the effects obtained by the first embodiment:
(1) The information component cassettes having individual information related to monitoring and operation and the methods that display the above information in the optimum form are created, and these information component cassettes are provided according to the types of the information. Thus, various types of information can be displayed in the optimum form, which improves the operation environment.
(2) Since the information component deck, which arranges information component cassettes, is provided, the information required for monitoring and operation can be accessed effectively. Also, the method of accessing various types of information can be unified.
(3) System expansion and improvement of the operation environment can be flexibly handled because the information component cassettes can be dynamically added or deleted in the information component deck.

### (3) Third Embodiment

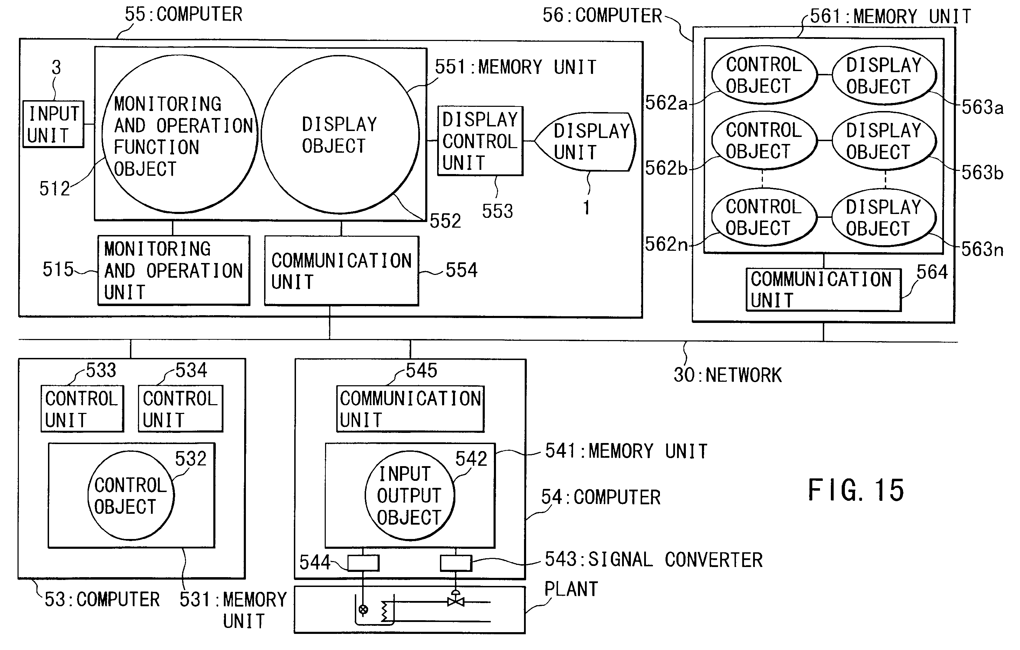

Figure 15 is a drawing indicating the configuration of a third embodiment of this invention.

In the embodiment shown in Figure 15, a process control system is configured using the distributed object system similar to the embodiment shown in Figure 12.

In Figure 15, computers 53 to 56 are connected to network 30.

In computer 56, memory unit 561 offers residing areas for control objects 562a to 562n and display objects 563a to 563n. The control objects 562a to 562n perform the functions to control a plant. The display objects 563a to 563n function as human interfaces required for monitoring and operation of a plant.

For the control objects 562a to 562n and display objects 563a to 563n, objects in both groups operating in association with each other are correlated, for example, like the relation of the control object 562a to the display object 563a.

Communication unit 564 executes communications between objects via the network 30.

In computer 55, memory unit 551 offers residing areas for monitoring and operation function object 512 and display object 552. The display object 552 offers the screen display that functions as a human interface. The display object 552 is one to which any of display objects residing in computer 56 has been downloaded.

Display control unit 553 shows the screen display that functions as a human interface based on the autonomous operation of the display object 552.

Communication unit 554 executes communications between objects via the network 30.

The control object in the embodiment shown in Figure 15 has the following functions:
(1) It controls a plant by controlling inputs and outputs of the plant,
(2) It sends control data to the display object, and
(3) It receives setting data sent from the display object.

The display object in the embodiment shown in Figure 15 has the following functions:
(1) It displays instrument faceplates, meter faceplates, trend graphs and the like,
(2) It receives control data sent from the control object and displays them, and
(3) It sends the data set by the operator to the control object.

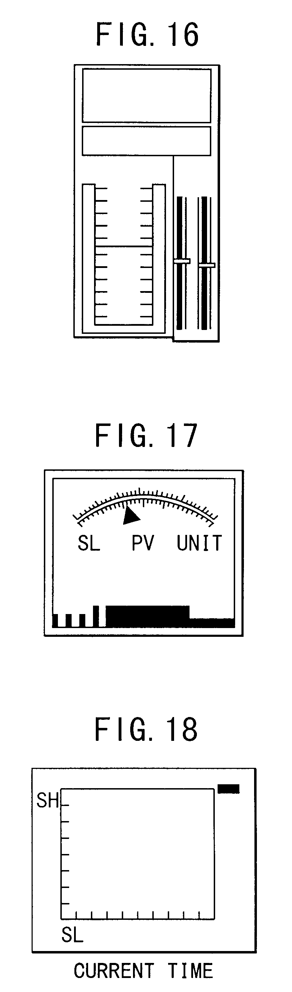

Figures 16, 17 and 18 show examples of an instrument faceplate, meter faceplate and trend graph, respectively.

Tag names are given to control objects and display objects. The same tag names are given to a control object and display object that operate in association with each other. Such a control object and a display object recognize each other using the tag name as a key and data are exchanged between the control object and display object to which the same tag names are given.

The operation of the system shown in Figure 15 will be described below.

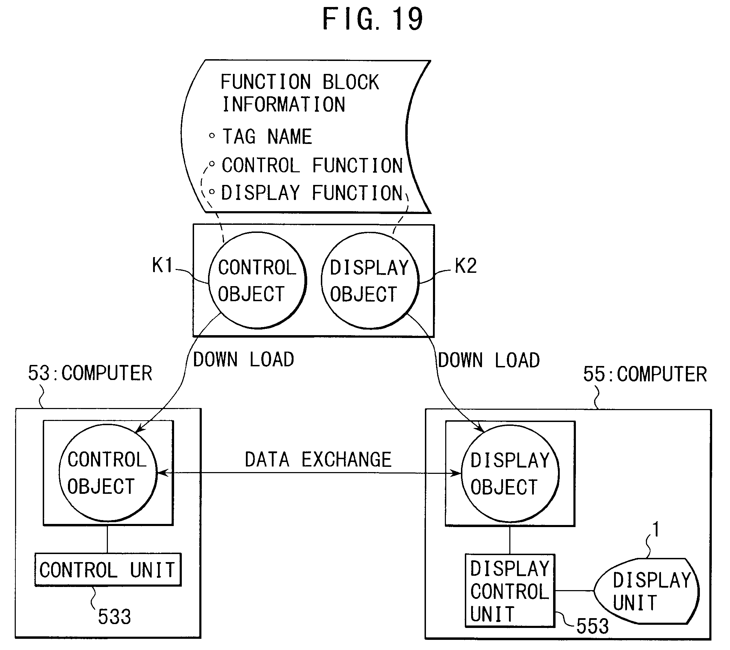

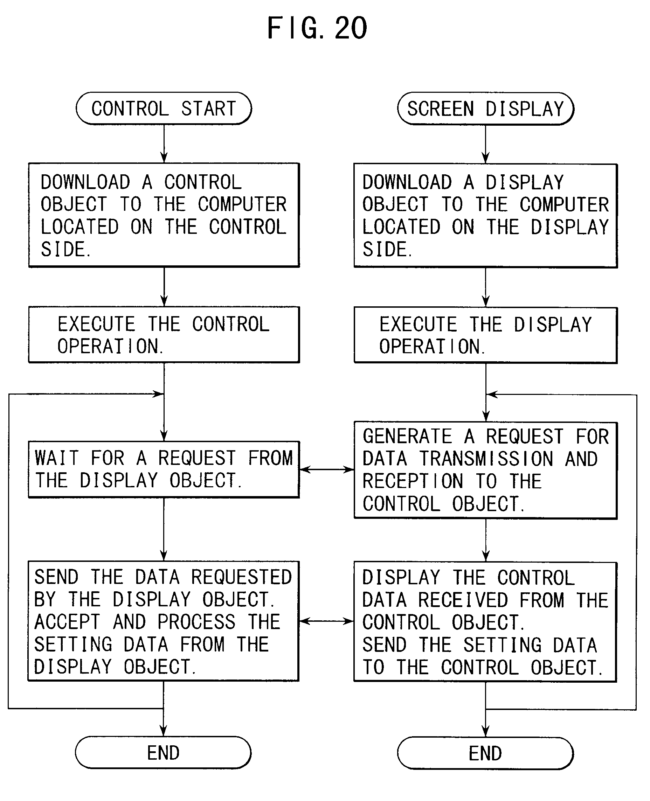

Figure 19 is a drawing indicating the flow of data in the system shown in Figure 15, and Figure 20 is a flow chart indicating the procedures for control operation and display operation.

The combination of a control function and a display function composes a function block. The control function is actualized by the control object and the display function by the display object. These control and display objects operate in association with each other.

Function block information that gives the details of a function block is provided. It is sufficient for the function block information to be contained in any of the computers.

The function block information contains information on the tag name, control function and display function.

The tag name is given to the control and display objects that operate in association with each other.

An example of the control function information is PID control, and examples of display function information are instrument faceplates, meter faceplates, and the like.

Control object K1 that actualizes the control function is correlated to the control function information. Also, display object K2 that actualizes the display function is correlated to the display function information.

Upon the start of control, control object K1 that actualizes the control function of the function block is downloaded to a computer in which control unit 533 resides, and display object K2 that actualizes the display function is downloaded to a computer in which display control unit 553 resides. The control object K1 executes the control operation and the display object K2 executes the display operation at each of the downloaded destinations, respectively.

The control object K1 and display object K2 detect each object that operates in association with itself, respectively, by using the tag name as a key. This enables both control object K1 and display object K2 to recognize each other.

The display object K2 that has recognized the partner receives the control data required for display from the control object K1 and displays the data. The display object K2 also sends the data set in it to the control object K1.

The control object K1 that has recognized the partner sends control data to the display object K2. The control object K1 also processes the set data sent from the display object K2.

In this case, the correlated control object and display object may reside in any computers, not restricted to the case of the embodiment.

According to this invention of the third embodiment, the following effects are obtained in addition to the effects obtained in the first embodiment:
(1) Control objects for controlling a plant and display objects for monitoring and operating the plant are provided and the control object and display object related to each other are operated in association with each other. Therefore, the control function and monitoring and operation function that were originally integrated can be displayed integrally on the screen. In addition, a mechanism to reflect control data from the control function on the monitoring and operation display screen can be easily constructed.
(2) Since the same tag names are given to the control object and display object that operate in association with each other, the control object and display object can readily recognize an object that is to be operated in association with itself, respectively.
(3) Since the display object displays the control data received from the correlated control object, the control data in the control function can be reflected on the display screen.
(4) Since the control object processes the received setting data sent from the correlated display object, the data set in monitoring and operation can be reflected on the control.

As described above, according to the present invention, a process control system that is more cost effective and offers better scalability (expandability) of system scale can be actualized.

## Claims

1. A process control system with the configuration in which objects having functions to construct the process control system are distributed and arranged in a plurality of computers connected to a network and each distributed and arranged object shares functions that the process control system has.

2. A process control system with the configuration in which all objects having functions to construct the process control system are arranged in a computer, each object shares the functions that the process control system has, and field equipment is directly connected to the computer.

3. A process control system with the configuration in which all objects having functions to construct the process control system are arranged in a computer, each object shares the functions that the process control system has, and process input-output equipment that inputs and outputs plant signals handled in the process control system is connected to the above computer via an exclusive bus.

4. A process control system in accordance with any of the claims 1 to 3, wherein said objects at least include the control objects having the control function in charge of process control, and the display objects having the monitoring and operation function in charge of displaying information related to process control.

5. A process control system in accordance with the claim 4, wherein the objects having the display function in charge of displaying information required for process control are included in place of said objects having the monitoring and operation function.

6. A process control system in accordance with any of the claims 1 to 3, wherein each of said objects is encapsulated, in which the data characterizing the function of the object and the method of realizing the predetermined function utilizing the data are integrated.

7. A process control system in accordance with any of the claims 1 to 3, wherein the following is included:
the life cycle management unit which at least manages the creation, deletion, copying and movement of said objects, and
the interface unit explicitly defined for exchanging information between objects that is carried out separately from mounting of the objects on a computer.

8. A process control system in accordance with the claim 4, wherein any of the following objects is included as said objects:
an object having the engineering function that defines and creates objects and constructs the system combining these objects,
an object having the process input-output function that inputs or outputs plant signals handled in the process control system, or
an object having the data processing function that actualizes sophisticated control and running operation support by performing secondary processing of the data handled in the process control system.

9. A process control system that controls and operates the plant by controlling process variables that exist in the plant, provided with:
a plurality of computers connected to a network, in which objects having a function to configure process control systems are distributed and arranged;
a memory unit that is provided in any of the computers and offers residing areas for information component cassettes which are objects having at least one among the information related to monitoring and operation of the plant, the access method to access this information, and the viewing method to display the information in the optimum form; and
a display control unit that is provided in any of the computers and displays the information related to monitoring and operation of the plant on a display screen based on the autonomous operation of the above information component cassettes;
and the above information component cassettes being provided according to the types of information.

10. A process control system in accordance with the claim 9, wherein an information component deck that arranges information component cassettes that exist in the system and offers a unified interface for accessing the information component cassettes, is made resident in the memory unit in any of the computers.

11. A process control system in accordance with the claim 9, wherein an alteration unit that dynamically adds or deletes the information component cassettes in the information component deck is provided.

12. A process control system that controls and operates the plant by controlling process variables that exist in the plant, provided with:
a plurality of computers connected to a network, in which objects having a function to configure process control systems are distributed and arranged;
a memory unit that is provided in any of the computers and offers residing areas for the control objects performing the functions for controlling the plant and for the display objects that function as human interfaces required for monitoring and operation of the plant;
a control unit that is provided in any of the computers and controls the plant based on the autonomous operation of the above control objects; and
a display control unit that is provided in any of the computers and displays the screen that functions as a human interface based on the autonomous operation of the above display objects;
and in which the control objects and display objects operating in association with each other are related to each other.

13. A process control system in accordance with the claim 12, configured such that said control object is downloaded to a computer in which said control unit resides, and said display object correlated to the control object is downloaded to a computer in which said display control unit resides, respectively, upon start of control, and the downloaded control object and display object exchange data with each other to execute control operation and display operation.

14. A process control system in accordance with the claim 12, wherein the same tag names are given to said control object and said display object that operate in association with each other and both the control object and display object recognize each other based on that tag name.

15. A process control system in accordance with the claim 12, wherein said display object displays the control data received from the correlated control object.

16. A process control system in accordance with the claim 12, wherein said control object processes the setting data received from the correlated display object.
